# EUROPÄISCHE PATENTSCHRIFT

(11) **EP 3 687 021 B1**
(45) Veröffentlichungstag und Bekanntmachung des Hinweises auf die Patenterteilung: **08.12.2021**
(21) Anmeldenummer: 20150407.3
(22) Anmeldetag: 07.01.2020
(51) Int. Cl.: B66F 9/075, H02J 3/00, H02B 3/00, H02B 1/32

(54) **VERFAHREN ZUR WARTUNG EINER MITTEL- ODER HOCHSPANNUNGSANLAGE SOWIE WARTUNGSVORRICHTUNG ZUR DURCHFÜHRUNG DER WARTUNG**
METHOD FOR MAINTENANCE OF A MEDIUM OR HIGH VOLTAGE SYSTEM, AND MAINTENANCE DEVICE FOR CARRYING OUT THE MAINTENANCE
PROCÉDÉ DE MAINTENANCE D'UN SYSTÈME MOYEN OU HAUTE TENSION ET DISPOSITIF DE MAINTENANCE POUR EFFECTUER LA MAINTENANCE

(30) Priorität: 23.01.2019 DE 102019200809
(43) Veröffentlichungstag der Anmeldung: 29.07.2020
(73) Patentinhaber: Siemens Energy Global GmbH & Co. KG, 81739 München (DE)
(72) Erfinder: Spahic, Ervin, 91052 Erlangen (DE); Zahner, Ulrich, 91052 Erlangen (DE)

(56) Entgegenhaltungen:
- CN-B- 105 337 201
- US-A1- 2016 294 166
- US-A1- 2017 113 352

## Beschreibung

Die Erfindung betrifft ein Verfahren zur Wartung einer Mittel- oder Hochspannungsanlage, die eine Vielzahl miteinander elektrisch verbindbarer elektrischer Module umfasst, die in einer Tragestruktur angeordnet sind.

Die zu wartende elektrische Anlage kann beispielsweise eine Stromrichteranlage sein, wobei der Stromrichter der Stromrichteranlage ein modularer Mehrstufenstromrichter ist. Ein solcher Mehrstufenstromrichter ist beispielsweise aus der WO 2016/150466 A1 bekannt. Die elektrischen Module sind einerseits Schaltmodule und anderseits Energiespeichermodule, die mit den Schaltmodulen gleichspannungsseitig verbunden sind.

Die zu wartende elektrische Anlage kann beispielsweise auch eine elektrische Speicheranordnung mit einer Vielzahl von Speichermodulen sein, wie aus der EP 3 361 598 A2 bekannt. Die Speichermodule sind in Reihen- und/oder Parallelschaltungen miteinander verbunden. Die Verschaltung erlaubt eine Zusammenschaltung von Niederspannungsmodulen einer relativ niedrigen Spannung von z.B. 100 V zu einer Gesamt-Anschlussspannung von mindestens 1 kV. Die Speichermodule sind in Tragestrukturen angeordnet, die als Modultürme ausgebildet sind.

Insbesondere bei Anordnungen mit Speichermodulen ergeben sich einige technische Nachteile. Bei Ausfall eines der Module ist unter Umständen ein ganzer Strang von diesem Ausfall betroffen. Ferner können aus einem Kurzschlussfall eines der Module Spannungsverzerrungen resultieren, die zu unerwünschten Strömen innerhalb der Anlage, zusätzlichen Verlusten und einer vorzeitigen Alterung führen können.

Üblicherweise werden in Störungs- und Fehlerfällen die defekten Module zu Wartung der Anlage manuell ausgetauscht.

Eine fahrbare Vorrichtung zum Entnehmen von Kondensatoren aus einer Hochspannungsanlage ist in der CN 10 533 72 01 B beschrieben.

Eine Wartungsbühne zur Wartung einer Umrichteranlage ist ferner in der US 2016/0294166 Al offenbart.

Eine weitere autonome fahrbare Vorrichtung ist aus der US 2017/0113352 Al bekannt.

Die Aufgabe der Erfindung ist es, ein Verfahren der obigen Art anzugeben, das eine möglichst effektive und zuverlässige Wartung der elektrischen Anlage ermöglicht.

Die Aufgabe wird erfindungsgemäß durch ein artgemäßes Verfahren mit den Verfahrensschritten nach Anspruch 1 gelöst, wobei die Verfahrensschritte nach einem Detektieren eines fehlerhaften elektrischen Moduls durchgeführt werden. Die Detektion des fehlerhaften Moduls kann beispielsweise mittels geeigneter Strom- und/oder Spannungsmessungen erfolgen. Jedem Modul kann ein Kommunikationsbaustein zugeordnet sein, der selbsttätig oder auf Anforderung durch eine Zentralsteuerung einen Fehler des zugehörigen Moduls meldet. Die Wartungsvorrichtung kann als eine fahrbare Hebebühne ausgebildet sein. Sie kann mehrstöckig sein und mit Hebemechanismen und einer Plattform ausgestattet sein. Die Wartungsvorrichtung umfasst zweckmäßigerweise eine Steuerungseinrichtung, die zur Steuerung der Wartungsvorrichtung eingerichtet ist. Die Steuerungseinrichtung kann beispielsweise einen Rechner umfassen, der die Positionierung der Wartungsvorrichtung übernimmt. Die Wartungsvorrichtung kann sich selbsttätig derart verlagern, dass eine Annäherung an den Ort des fehlerhaften Moduls ermöglicht ist. Das Annähern kann mittels geeigneter Induktionsschleifen oder auch optischer Markierungen am Boden erfolgen. Denkbar ist eine gelernte Position des entsprechenden Moduls oder eine Bilderfassung mit digitaler Bilderkennung zur Orientierung der Wartevorrichtung. Der Potenzialausgleich erfolgt zweckmäßigerweise mittels einer elektrischen Kontaktierung. Die Tragestruktur kann ein Turm, eine Tragekonstruktion oder ein Schrank sein, der die elektrischen Module trägt. In der Tragestruktur ist vorzugsweise der Platz bzw. Ort des jeweiligen elektrischen Moduls eindeutig bestimmt. Die Werkzeugeinrichtung der Wartungseinrichtung kann mechanische Arme, Lenkrollen und dergleichen umfassen, mittels derer das fehlerhafte Modul aus der Tragestruktur herausgelöst werden kann, zum Beispiel herausgezogen oder herausgeschoben, und dann in der Wartungseinrichtung aufgenommen wird

Ein wesentlicher Vorteil des erfindungsgemäßen Verfahrens ist, dass die Wartung schneller und für das Wartungspersonal sicherer erfolgen kann. Die erforderliche manuelle Entladung und manuelle Erdung einer großen Anzahl von Erdungsstellen entfällt vorteilhaft. Die Anlage ist dank dem erfindungsgemäßen Verfahren schneller betriebsbereit.

Die Wartungsvorrichtung kann optional mit einem Käfig versehen sein, der eine gefahrlose Mitfahrt einer Person, insbesondere eines Wartungsarbeiters ermöglicht. Der Wartungsarbeiter kann gegebenenfalls Handlungen beim Herauslösen und Entnehmen eines fehlerhaften Moduls unterstützen. Diese können in einem solchen Fall teilweise automatisiert erfolgen.

Die Wartungsvorrichtung kann einen Vorderrahmen aufweisen, der mit der Tragestruktur derart abgestimmt ist, dass bei der Annäherung der Wartungsvorrichtung an die Tragestruktur eine präzise horizontale Position zwischen der Tragestruktur und der Wartungsvorrichtung, zum Beispiel durch vier Leitwinkel an Seitenholmen der Wartungsvorrichtung, eingenommen werden kann. Die Wartungsvorrichtung kann ferner zwei oder mehr Lenkrollen umfassen, die sich bei der Annäherung an die Tragestruktur passiv verhalten und für eine Bogenfahrt auf einem Fahrweg aktiv einlenken können. Geeigneterweise umfasst die Wartungsvorrichtung Werkzeuge zum Lösen etwaiger Arretierungen zum Herauslösen des fehlerhaften Moduls, sofern erforderlich.

Erfindungsgemäß wird ein elektrisches Ersatzmodul zum Ersetzen des fehlerhaften elektrischen Moduls in einer weiteren Aufnahme der Wartungsvorrichtung bereitgestellt, wobei nach dem Herauslösen des fehlerhaften Moduls aus der Tragestruktur das Ersatzmodul an dessen Stelle eingesetzt wird. Die Wartungsvorrichtung kann beispielsweise mehrere Etagen umfassen, wobei die Aufnahme zur Aufnahme des fehlerhaften Moduls in einer ersten Etage und die weitere Aufnahme zur Bereitstellung des Ersatzmoduls in einer zweiten Etage angeordnet sein kann. Nach geeigneter Positionierung kann das fehlerhafte Modul mit Hilfe eines Linearantriebs in die erste Aufnahme herausgezogen und bezogen auf das elektrische Potenzial der Wartungsvorrichtung dort elektrisch angebunden werden. Wenn das Modul unter Berührungsspannung entladen ist, herrschen auf der Wartungsvorrichtung keine gefährlichen Spannungen. Ein Wartungsmitarbeiter kann entsprechend gefahrenlos Handlungen vornehmen. Mittels des Linearantriebs kann das Ersatzmodul anstelle des fehlerhaften Moduls in der Tragestruktur angeordnet werden, beispielsweise durch Einschieben. Dabei werden geeigneterweise alle relevanten elektrischen Verbindungen hergestellt.

Bevorzugt wird zwischen der Wartungsvorrichtung und der Tragestruktur eine starre mechanische Verbindung hergestellt, bevor das fehlerhafte elektrische Modul aus der Tragestruktur herausgelöst wird. Auf diese Weise ist ein sicheres Herauslösen und Entfernen des fehlerhaften Moduls gewährleistet.

Vorzugsweise wird mittels einer Positionierungseinrichtung eine horizontale und/oder vertikale Positionierung der Wartungsvorrichtung gegenüber dem fehlerhaften elektrischen Modul durchgeführt, bevor das fehlerhafte elektrische Modul aus der Tragestruktur herausgelöst wird. Die Positionierungseinrichtung kann vorzugsweise Kameras, beispielsweise 3d-Kameras oder dergleichen, umfassen.

Gemäß einer Ausführungsform der Erfindung sind die elektrischen Module sowie das Ersatzmodul elektrische Speichermodule zum Speichern elektrischer Energie, wobei das Ersatzmodul vor dessen Einsetzen in die Tragestruktur aufgeladen wird. Die Einbringung geladener Module ist von Vorteil, weil das sonst übliche Laden über die anderen Module der Anlage komplex, zeitraubend und energieverschwendend ist.

Vorzugsweise kehrt die Wartungsvorrichtung nach dem Aufnehmen des fehlerhaften elektrischen Moduls in die Wartungsvorrichtung selbsttätig in eine vorbestimmte Startposition zurück. In der Startposition kann nach Anbindung der Wartungsvorrichtung an das Erdpotenzial der sichere Zustand des fehlerhaften Moduls hergestellt und im Anschluss das fehlerhafte Modul zur Weiterbearbeitung entnommen werden. Zugleich kann eine Verbindung mit einer Energieversorgung der Wartungsvorrichtung hergestellt werden. Auf diese Weise kann der Eigenbedarf der Wartungsvorrichtung gedeckt und diese für einen nächsten Einsatz vorbereitet (beispielsweise ihre Batterien wieder aufgeladen) werden.

Die Erfindung betrifft ferner eine Wartungsvorrichtung nach Anspruch 5.

Die Aufgabe der Erfindung besteht darin, eine solche Wartungsvorrichtung vorzuschlagen, die eine möglichst sichere und effektive Wartung der Mittel- oder Hochspannungsanlage ermöglicht.

Die Aufgabe wird bei der Wartungsvorrichtung nach Anspruch 5 erfindungsgemäß dadurch gelöst, dass die Wartungsvorrichtung zum selbsttätigen Annähern an ein als fehlerhaft detektiertes elektrisches Modul eingerichtet ist, wobei die Wartungsvorrichtung ferner zum Herauslösen des fehlerhaften elektrischen Moduls aus der Tragestruktur mittels einer dazu vorgesehener Werkzeugeinrichtung sowie zum Platzieren des fehlerhaften elektrischen Moduls in einer dazu vorgesehenen Aufnahme eingerichtet ist. Die wesentlichen Vorteile der erfindungsgemäßen Wartungsvorrichtung entsprechen denjenigen, die bereits im Zusammenhang mit dem erfindungsgemäßen Wartungsverfahren zuvor erläutert wurden.

Vorzugsweise verfügt die Wartungsvorrichtung über einen eigenen Antrieb zur Fortbewegung der Wartungsvorrichtung. Der Antrieb kann beispielsweise elektrisch sein. Er kann über Batterien verfügen, die an einer vorbestimmten Position, beispielsweise einer Startposition aufgeladen werden können. Mit Hilfe des Antriebs kann sich die Wartungsvorrichtung selbsttätig bewegen, so dass keine weiteren Vorkehrungen diesbezüglich notwendig sind.

Die Wartungsvorrichtung kann zur Beförderung von Personen eingerichtet sein. Die Person kann ein Wartungsarbeiter sein, der den nicht automatisierten Teil der Aufgaben bei der Wartung übernehmen kann. Die Wartungsvorrichtung kann beispielsweise einen elektrisch abschirmenden Käfig umfassen, der für die zu befördernde Person vorgesehen ist.

Gemäß einer Ausführungsform der Erfindung umfasst die Wartungsvorrichtung Verriegelungswerkzeuge, die zur Verriegelung von Arretierungen zwischen einem der elektrischen Module und der Tragestruktur eingerichtet ist. Auf diese Weise kann auch die Verriegelung automatisiert erfolgen, bzw. alternativ können die Verriegelungswerkzeuge auch von der mitbeförderten Person manuell oder halbautomatisch bedient werden.

Gemäß einer Ausführungsform der Erfindung ist die Tragestruktur ein Speicherschrank. Optional kann einer oder mehrere Speicherschränke in einem Speichergebäude angeordnet sein. Es kann von Vorteil sein, wenn im Speichergebäude ein Sonderschrank bereitgestellt sein, der vorzugsweise einen gleichen Aufbau wie die übrigen Speicherschränke aufweist. Der Sonderschrank kann zur Aufnahme, zum Laden und/oder Vorhalten mehrerer geeigneterweise geladener Ersatzmodule eingerichtet sein. Von dort kann in gleicher Weise wie beim Tausch eines Ersatzmoduls zu Beginn eines Tauschzyklus ein geladenes Ersatzmodul in die freie Etage der Wartungsvorrichtung aufgenommen und nach der oben beschriebenen Weise mit einem defekten Modul getauscht werden. Das defekte Modul kann an einer freien Stelle im Sonderschrank abgestellt werden. Der Sonderschrank kann zudem über eine Energieladevorrichtung für die bewegliche Wartungsvorrichtung verfügen.

Die Wartungsvorrichtung kann ferner über eine zusätzliche Aufnahme, beispielsweise eine zusätzliche Etage, verfügen, worin ein geladenes Eigenbedarfsmodul für den eigenen Energiebedarf aufgenommen sein kann. Zu Beginn eines Wartungsvorganges entnimmt die Wartungsvorrichtung, die in deren Startposition ihre Energie beispielsweise aus dem Sonderschrank oder einer entsprechenden Ladestation bezieht, gegebenenfalls das geladene Eigenbedarfsmodul für den Eigenbedarf in die zusätzliche Aufnahme. Bei Rückkehr vom Wartungsvorgang wird gegebenenfalls das Eigenbedarfsmodul in eine freie Position im Sonderschrakt oder einer entsprechenden Ablagevorrichtung verbracht und durch ein geladenes ersetzt. Es ist darüber hinaus denkbar, dass das Eigenbedarfsmodul geladen wird, während es mit der Wartungsvorrichtung verbunden ist.

Es kann im Rahmen der Erfindung vorteilhaft sein, wenn mehrere der zuvor beschriebenen Sonderschränke für die Vorhaltung gegebenenfalls geladener Speichermodule verwendet werden. Die Sonderschränke können Teil der gesamten Hoch- oder Mittelspannungsanlage sein und eine Funktion in deren Betrieb erfüllen. Optional kann ein erster ausgefallener Speicherschrank eines Strangs der Anlage als Reservoir für Tauschmodule für andere Speicherschränke dienen, die sukzessive alle defekten Speichermodule der Anlage auf sich konzentriert.

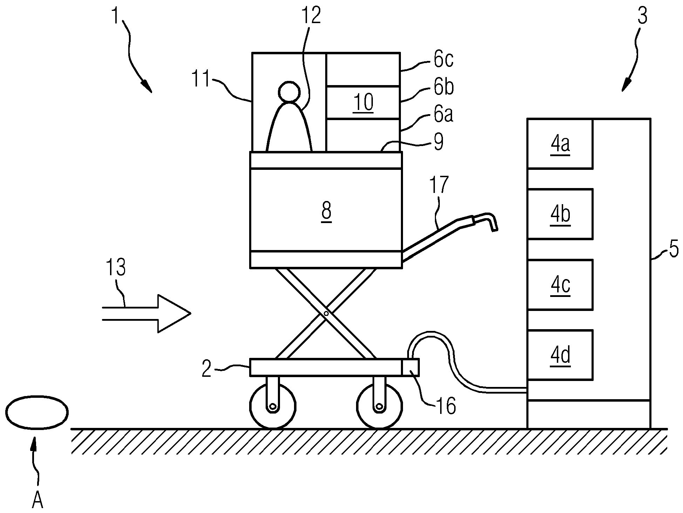

Die Erfindung wird im Folgenden anhand eines in der Figur dargestellten Ausführungsbeispiele weiter erläutert.

Die Figur zeigt ein Ausführungsbeispiel einer erfindungsgemäßen Wartungsvorrichtung in einer schematischen Ausführung.

In der Figur ist eine Wartungsvorrichtung 1 dargestellt. Die Wartungsvorrichtung 1 umfasst einen fahrbaren Untersatz 2 mit einem elektrischen Antrieb. Die Wartungsvorrichtung 1 ist damit dazu eingerichtet, sich selbsttätig in einer Halle zu bewegen, in der eine Mittel- oder Hochspannungsanlage 3 mit elektrischen Modulen in Form von Speichermodulen 4a-4d angeordnet ist. Die Speichermodule 4a-4d sind in Aufnahmeschächten in einer Tragestruktur 5 angeordnet.

Die Wartungsvorrichtung 1 umfasst mindestens 3 Aufnahmeschächte 6a, 6b und 6c , die zur Aufnahme eines defekten Speichermoduls (6a), ferner zur Aufnahme eines Ersatzmoduls 10 (6b) und einer Energieversorgung (6c) vorgesehen sind. Zudem umfasst die Wartungsvorrichtung 1 ggf. einen Aufenthaltsraum 11 für eine zu befördernde Person 12.

Zur Durchführung eines Wartungsvorganges nähert sich die Wartungsvorrichtung 1 der Tragestruktur 5. Dazu fährt die Wartungsvorrichtung von ihrer Parkposition A mit Ladefunktion, wo sie geerdet und sicher zugängig ist, zur Tragestruktur 5, was in der Figur mit einem Pfeil 13 angedeutet ist. Nach einer Positionierung der Wartungsvorrichtung 1 gegenüber einem defekten Speichermodul (in dem in Figur dargestellten Beispiel ist das Speichermodul 4b als fehlerhaft detektiert worden), wird zunächst ein Potenzialausgleich zwischen der Wartungsvorrichtung 1 bzw. deren Potenzialausgleichselement 16 und der Tragestruktur 5 explizit oder implizit im Rahmen der Annäherung hergestellt. Anschließend wird das Speichermodul 4b aus der Tragestruktur 5 mittels geeigneter Werkzeuge 17 herausgelöst und in den Aufnahmeschacht 6a der Wartungsvorrichtung übernommen. Danach kann das Ersatzmodul 10, das zuvor in gleicher Weise von der Tragstruktur mit geladenen Reservemodulen in den Aufnahmeschacht 8 übernommen wurde, an der Stelle des Speichermoduls 4b eingesetzt werden. Dazu werden alle notwendigen mechanischen Arretierungen und elektrischen Verbindungen automatisch oder manuell hergestellt, so dass die Hochspannungsanlage ihren Betrieb aufnehmen bzw. fortsetzen kann. Die Wartungsvorrichtung 1 fährt die sicher zugängige Tragestruktur zur Aufnahme defekter Module an und legt das beschädigte Modul in einem noch freien Ablageschacht ab. Danach kehrt die Wartungsvorrichtung zu ihrer Parkposition mit Ladefunktion zurück.

## Patentansprüche

1. Verfahren zur Wartung einer Mittel- oder Hochspannungsanlage (3), die eine Vielzahl miteinander verbindbarer elektrischer Module (4a-d) umfasst, die in einer Tragestruktur (5) angeordnet sind, mit den Verfahrensschritten
- selbsttätiges Annähern einer fahrbaren Wartungsvorrichtung (1), nach einem Detektieren eines fehlerhaften elektrischen Moduls, an das fehlerhafte elektrische Modul (4b),
- Herauslösen des fehlerhaften elektrischen Moduls (4b) aus der Tragestruktur (5) mittels einer dazu vorgesehener Werkzeugeinrichtung (17) der Wartungsvorrichtung (1);
- Aufnehmen des fehlerhaften elektrischen Moduls (4b) in eine dazu vorgesehene Aufnahme (8) der Wartungsvorrichtung (1),
wobei ein elektrisches Ersatzmodul (10) zum Ersetzen des fehlerhaften elektrischen Moduls (4b) in einer weiteren Aufnahme (9) der Wartungsvorrichtung (1) bereitgestellt wird, wobei nach dem Herauslösen des fehlerhaften Moduls (4b) aus der Tragestruktur (5) das Ersatzmodul (10) an dessen Stelle eingesetzt wird, und wobei zwischen der Wartungsvorrichtung (1) und der Tragestruktur (5) mindestens eine elektrische Verbindung hergestellt wird, bevor das fehlerhafte elektrische Modul (4b) aus der Tragestruktur (5) herausgelöst und gegen das Ersatzmodul getauscht wird.

2. Verfahren nach Anspruch 1, wobei mittels einer Positionierungseinrichtung eine horizontale und vertikale Positionierung der Wartungsvorrichtung (1) gegenüber dem fehlerhaften elektrischen Modul (4b) durchgeführt wird, bevor das fehlerhafte elektrische Modul (4b) aus der Tragestruktur (5) herausgelöst und gegen das Ersatzmodul getauscht wird.

3. Verfahren nach einem der vorangehenden Ansprüche 1 bis 2, wobei die elektrischen Module (4a-d) sowie das Ersatzmodul (10) elektrische Speichermodule zum Speichern elektrischer Energie sind, wobei das Ersatzmodul (10) vor dessen Einsetzen in die Tragestruktur (5) aufgeladen wird.

4. Verfahren nach einem der vorangehenden Ansprüche, wobei die Wartungsvorrichtung (1) nach dem Aufnehmen des fehlerhaften elektrischen Moduls (4b) die Wartungsvorrichtung (1) selbsttätig in eine vorbestimmte Park- und/oder Ladeposition (A) zurückkehrt.

5. Wartungsvorrichtung (1) zur Wartung einer Mittel- oder Hochspannungsanlage (3), die eine Vielzahl miteinander elektrisch verbindbarer elektrischer Module (4a-d) umfasst, die in einer Tragestruktur (5) angeordnet sind, wobei die Wartungsvorrichtung (1) zum selbsttätigen Annähern an ein als fehlerhaft detektiertes elektrische Modul eingerichtet ist, wobei die Wartungsvorrichtung (1) ferner zum Herauslösen des fehlerhaften elektrischen Moduls (4b) aus der Tragestruktur (5) mittels einer dazu vorgesehener Werkzeugeinrichtung (17) sowie zum Platzieren des fehlerhaften elektrischen Moduls (4b) in einer dazu vorgesehenen Aufnahme (8) eingerichtet ist, wobei die Wartungsvorrichtung dazu eingerichtet ist, nach dem Herauslösen des fehlerhaften Moduls (4b) aus der Tragestruktur (5) ein Ersatzmodul (10) an dessen Stelle einzusetzen,
**dadurch gekennzeichnet,**
**dass** das elektrische Ersatzmodul (10) zum Ersetzen des fehlerhaften Moduls (4b) in einer weiteren Aufnahme (9) der Wartungsvorrichtung (1) bereitgestellt ist,
wobei die Wartungsvorrichtung ferner dazu eingerichtet ist, zwischen der Wartungsvorrichtung (1) und der Tragestruktur (5) mindestens eine elektrische Verbindung herzustellen, bevor das fehlerhafte elektrische Modul (4b) aus der Tragestruktur (5) herausgelöst und gegen das Ersatzmodul getauscht wird.

6. Wartungsvorrichtung (1) nach Anspruch 5, wobei die Wartungsvorrichtung (1) über einen eigenen Antrieb (2) zur Fortbewegung der Wartungsvorrichtung (1) sowie bevorzugt über eine geeignete Steuerung verfügt.

7. Wartungsvorrichtung (1) nach einem der Ansprüche 5 oder 6, wobei die Wartungsvorrichtung (1) zur Beförderung von Personen (12) eingerichtet ist.

8. Wartungsvorrichtung (1) nach einem der Ansprüche 5 bis 7, wobei die Wartungsvorrichtung (1) Verriegelungswerkzeuge umfasst, die zur Verriegelung von Arretierungen zwischen einem der elektrischen Module (4b) und der Tragestruktur (5) eingerichtet ist.

## Claims

1. Method for maintaining a medium-voltage or high-voltage installation (3) that comprises a plurality of electrical modules (4a-d) that can be connected to one another and are arranged in a supporting structure (5), having the method steps of:
- after detection of a faulty electrical module, a mobile maintenance apparatus (1) automatically approaching the faulty electrical module (4b),
- removing the faulty electrical module (4b) from the supporting structure (5) by means of a tool device (17), which is provided for this purpose, of the maintenance apparatus (1);
- accommodating the faulty electrical module (4b) in a receptacle (8), which is provided for this purpose, of the maintenance apparatus (1), wherein an electrical replacement module (10) for replacing the faulty electrical module (4b) is provided in a further receptacle (9) of the maintenance apparatus (1),
wherein, following the removal of the faulty module (4b) from the supporting structure (5), the replacement module (10) is inserted in its place, and wherein at least one electrical connection is produced between the maintenance apparatus (1) and the supporting structure (5) before the faulty electrical module (4b) is removed from the supporting structure (5) and exchanged for the replacement module.

2. Method according to Claim 1, wherein horizontal and vertical positioning of the maintenance apparatus (1) with respect to the faulty electrical module (4b) is carried out by means of a positioning device before the faulty electrical module (4b) is removed from the supporting structure (5) and exchanged for the replacement module.

3. Method according to either of the preceding Claims 1 and 2, wherein the electrical modules (4a-d) and the replacement module (10) are electrical storage modules for storing electrical energy, wherein the replacement module (10) is charged before it is inserted into the supporting structure (5) .

4. Method according to one of the preceding claims, wherein the maintenance apparatus (1) automatically returns to a predetermined parking position and/or charging position (A) after the faulty electrical module (4b) has been accommodated.

5. Maintenance apparatus (1) for maintaining a medium-voltage or high-voltage installation (3) that comprises a plurality of electrical modules (4a-d) that can be electrically connected to one another and are arranged in a supporting structure (5), wherein the maintenance apparatus (1) is configured to automatically approach an electrical module detected as being faulty, wherein the maintenance apparatus (1) is further configured to remove the faulty electrical module (4b) from the supporting structure (5) by means of a tool device (17) provided for this purpose and to place the faulty electrical module (4b) in a receptacle (8) provided for this purpose, wherein the maintenance apparatus is configured, following the removal of the faulty module (4b) from the supporting structure (5), to insert a replacement module (10) in its place, **characterized in that** the electrical replacement module (10) for replacing the faulty module (4b) is provided in a further receptacle (9) of the maintenance apparatus (1), wherein the maintenance apparatus is further configured to produce at least one electrical connection between the maintenance apparatus (1) and the supporting structure (5) before the faulty electrical module (4b) is removed from the supporting structure (5) and exchanged for the replacement module.

6. Maintenance apparatus (1) according to Claim 5, wherein the maintenance apparatus (1) has a dedicated drive (2) for onward movement of the maintenance apparatus (1) and preferably a suitable control means.

7. Maintenance apparatus (1) according to either of Claims 5 and 6, wherein the maintenance apparatus (1) is configured to convey people (12).

8. Maintenance apparatus (1) according to one of Claims 5 to 7, wherein the maintenance apparatus (1) comprises locking tools that are configured to lock locking means between one of the electrical modules (4b) and the supporting structure (5).

## Revendications

1. Procédé d'entretien d'un système (3) de moyenne tension ou de haute tension, qui comprend une pluralité de modules (4a-d) électriques pouvant être reliés entre eux, qui sont disposés dans une structure (5) de support, comprenant les stades de procédé
- approche automatique d'un dispositif (1) d'entretien pouvant être déplacé, après la détection d'un module électrique défectueux, du module (4b) électrique défectueux,
- extraction du module (4b) électrique défectueux de la structure (5) de support au moyen d'un dispositif (17) à outil prévu à cet effet du dispositif (1) d'entretien ;
- réception du module (4b) électrique défectueux dans un logement (8) prévu à cet effet du dispositif (1) d'entretien, un module (10) électrique de remplacement étant, pour le remplacement du module (4b) électrique défectueux, mis à disposition dans un autre logement (9) du dispositif (1) d'entretien, dans lequel, après l'extraction du module (4b) défectueux de la structure (5) de support, on insère le module (10) de remplacement à sa place et dans lequel on ménage entre le dispositif (1) d'entretien et la structure (5) de support au moins une liaison électrique, avant d'extraire le module (4b) électrique défectueux de la structure (5) de support et de le remplacer par le module de remplacement.

2. Procédé suivant la revendication 1, dans lequel au moyen d'un dispositif de mise en position on effectue une mise en position horizontale et verticale du dispositif (1) d'entretien par rapport au module (4b) électrique défectueux, avant d'extraire le module (4b) électrique défectueux de la structure (5) de support et de le remplacer par le module de remplacement.

3. Procédé suivant l'une des revendications 1 à 2 précédentes, dans lequel les modules (4a-d) électriques ainsi que le module (10) de remplacement sont des modules électriques d'accumulation pour l'accumulation d'énergie électrique, le module (10) de remplacement étant chargé avant son insertion dans la structure (5) de support.

4. Procédé suivant l'une des revendications précédentes, dans lequel le dispositif (1) d'entretien revient, après la réception du module (4b) électrique défectueux, automatiquement dans une position (A) déterminée à l'avance de garage et/ou de charge.

5. Dispositif (1) d'entretien pour l'entretien d'un système (3) de moyenne tension ou de haute tension, qui comprend une pluralité de modules (4a-d) électriques pouvant être reliés électriquement entre eux, qui sont disposés dans une structure (5) de support, le dispositif (1) d'entretien étant conçu pour se rapprocher automatiquement d'un module électrique détecté comme défectueux, dans lequel le dispositif (1) d'entretien est conçu en outre pour extraire le module (4b) électrique défectueux de la structure (5) de support au moyen d'un dispositif (17) à outil prévu à cet effet, ainsi que pour mettre le module (4b) électrique défectueux dans un logement (8) prévu à cet effet, le dispositif d'entretien étant conçu pour, après l'extraction du module (4b) défectueux de la structure (5) de support, insérer à sa place un module (10) de remplacement,
**caractérisé en ce que**
le module (10) électrique de remplacement est, pour le remplacement du module (4b) défectueux, mis à disposition dans un autre logement (9) du dispositif (1) d'entretien,
dans lequel le dispositif d'entretien est conçu en outre pour ménager au moins une liaison électrique entre le dispositif (1) d'entretien et la structure (5) de support, avant d'extraire le module (4b) électrique défectueux de la structure (5) de support et de le remplacer par le module de remplacement.

6. Dispositif (1) suivant la revendication 5, dans lequel le dispositif (1) d'entretien dispose de son propre entraînement (2) pour le déplacement du dispositif (1) d'entretien, ainsi que, de préférence, de sa propre commande.

7. Dispositif (1) suivant la revendication 5 ou 6, dans lequel le dispositif (1) d'entretien est conçu pour le transport de personnes (12).

8. Dispositif (1) suivant l'une des revendications 5 à 7, dans lequel le dispositif (1) d'entretien comprend des outils de verrouillage, qui sont conçus pour le verrouillage de blocages entre l'un des modules (4b) électrique et la structure (5) de support.
